Europäisches Patentamt

European Patent Office

Office européen des brevets

(19)

(11) **EP 0 555 508 B1**

(12) **EUROPÄISCHE PATENTSCHRIFT**

(45) Veröffentlichungstag und Bekanntmachung des Hinweises auf die Patenterteilung:
**12.05.1999 Patentblatt 1999/19**

(51) Int Cl.[6]: **G01N 21/59**, G01N 21/35, G01J 1/36, G02B 26/04

(21) Anmeldenummer: **92102499.8**

(22) Anmeldetag: **14.02.1992**

(54) **Verfahren und Vorrichtung zur simultanen Bestimmung der Konzentrationen von Molekülverbindungen in Gasen und Flüssigkeiten**

Method and device for simultaneous determination of concentrations of molecular compounds in gases and liquids

Procédé et dispositif pour la détermination simultanée de concentrations de composés moléculaires dans des gaz et des liquides

(84) Benannte Vertragsstaaten:
**AT BE CH DE ES FR GB GR IT LI NL PT SE**

(43) Veröffentlichungstag der Anmeldung:
**18.08.1993 Patentblatt 1993/33**

(73) Patentinhaber: **Krieg, Gunther, Prof.Dr.Ing.**
**D-76227 Karlsruhe (DE)**

(72) Erfinder:
- **Krieg, Gunther, Prof.Dr.-Ing.**
  **W-7500 Karlsruhe 41 (DE)**
- **Koukolitschek, Karl, Dipl.-Ing.(FH)**
  **W-7500 Karlsruhe 21 (DE)**
- **Maier, Wilfried**
  **W-7519 Sulzfeld (DE)**

(74) Vertreter: **Dipl.-Ing. Heiner Lichti**
**Dipl.-Phys. Dr.rer.nat. Jost Lempert Dipl.-Ing.**
**Hartmut Lasch**
**Postfach 41 07 60**
**76207 Karlsruhe (DE)**

(56) Entgegenhaltungen:
EP-A- 0 254 879          DE-A- 3 623 345
DE-A- 4 030 960          GB-A- 1 402 440
US-A- 3 904 880          US-A- 4 008 394

- TECHNISCHES MESSEN TM Bd. 52, Nr. 6, Juni 1985, MUNCHEN DE Seiten 242 - 246 G. SCHMIDTKE ET AL. 'Spektroskopische Umweltmesstechnik'
- AUTOMATISIERUNGSTECHNISCHE PRAXIS - ATP Bd. 32, Nr. 7, Juli 1990, MUNCHEN DE Seiten 338 - 342 T. FRECH 'Entwicklungstendenzen der Betriebsanalysentechnik'
- TECHNISCHES MESSEN TM Bd. 52, Nr. 6, Juni 1985, MUNCHEN DE Seiten 233 - 241 W. SCHAEFER ET AL. 'Spektroskopische Gas und Flüssigkeits-Prozessmesstechnik'

# Beschreibung

Die Erfindung betrifft ein Verfahren zur schnellen und präzisen Bestimmung der Konzentrationen von optische Strahlung absorbierenden Molekülverbindungen in Gasen und Flüssigkeiten sowie eine Vorrichtung zur schnellen und präzisen Messung der optischen Absorption durch Molekülverbindungen.

Derartige Verfahren und Vorrichtungen sind in verschiedenartigster Weise bekannt geworden. Sie weisen eine optische Strahlungsquelle, eine Zelle zur Aufnahme des zu untersuchenden Mediums, einen optischen Strahlungsempfänger mit nachgeschalteter elektronischer Signalverarbeitung, sowie Maßnahmen zur optischen Filterung der Strahlung auf. Zur Verbesserung des Signal/Rausch-Verhältnisses werden oftmals mechanische Chopper eingesetzt, welche die optische Strahlung periodisch unterbrechen und damit eine Wechselstrom-Signalverarbeitung ermöglichen. Diese Chopper bestehen aus rotierenden Kreisscheiben oder pendelförmig hin- und herbewegten Körpern, die speziell geformte Öffnungen oder Stege aufweisen und dadurch eine Modulation der optischen Strahlung bewirken.

Der Nachteil der gemäß dem Stand der Technik bisher eingesetzten Choppersysteme besteht darin, daß die aufgrund des 1/f-Rauschens der elektrischen Bauelemente sowie der speziellen physikalischen Eigenschaften der Strahlungsdetektoren erforderlichen hohen Chopperfrequenzen nicht einfach und nicht kostengünstig realisiert werden können, um das geforderte Signal/Rausch-Verhältnis zu erreichen. Das erfordert hohe Rotationsfrequenzen der Antriebsmotoren und führt dement-sprechend zu einem schnellen Verschleiß der Lager sowie der übrigen mechanischen Komponenten. Letzteres wirkt sich insbesondere bei modernen Halbleiter-Strahlungsdetektoren nachteilig aus, da z.B. PbS-, PbSe-, HgCdTe-, InSb- bei relativ hohen Chopperfrequenzen im Bereich von einigen Kilohertz optimal arbeiten. Da ferner die Strahlungsbündel zur möglichst gleichmäßigen Ausleuchtung der Gas-/Flüssigkeits-Meßzelle einen großen Durchmesser bzw. einen großen Querschnitt aufweisen müssen, tritt bei den Systemen gemäß dem Stand der Technik zudem als weiterer Nachteil eine zeitliche Verschmierung der Strahlungsimpulse am Detektor auf, was zu Komplikationen und Kostensteigerungen bei der elektronischen Signalverarbeitung führt. Außerdem ist aufgrund der unvermeidlichen Jittereffekte beim Chopper damit eine einschneidende Verschlechterung der Meßgenauigkeit, der Reproduzierbarkeit und der Nullpunktsstabilität verbunden. Im Zuge der weltweit gesetzlich verfügten Absenkungen der Schadstoffkonzentrationen in Emissionen, an Arbeitsplätzen und in festen bzw. flüssigen Gütern, wie z.B. Lebensmitteln, ist jedoch die Verbesserung der drei obengenannten Größen im Vergleich zum Stand der Technik zwingend erforderlich.

G.Schmidtke et al.:"Spektroskopische Umweltmeßtechnik", Technisches Messen tm, 51.Jahrgang, Heft 6, 1985, S.242 offenbart eine Vorrichtung zur simultanen Bestimmung mehrerer Stoffe mit einem Spektrometer, das einen Zeilendetektor enthält, der seinerseits aus einer Vielzahl von strahlungsempfindlichen Sensorelementen besteht.

Aus der DE-A-36 23 345 ist eine Vorrichtung bekannt, die es erlaubt, mit einem einzigen strahlungsempfindlichen Sensorelement mehrere Gase oder Flüssigkeiten nacheinander zu bestimmen.

Der Erfindung liegt daher die Aufgabe zugrunde, ein Verfahren und eine Vorrichtung der eingangs genannten Art dahingehend weiterzuentwickeln, daß es zur simultanen Multikomponentenanalyse eingesetzt werden kann. Vorteilhafterweise wird dafür gesorgt, daß bei niedriger Drehzahl des Chopperantriebs eine um den Faktor 10 bis 10000 höhere Frequenz der Strahlungsmodulation erzielt wird und daß ferner unvermeidliche Jittereffekte des Choppers nicht zu Verschlechterungen von Meßgenauigkeit, Reproduzierbarkeit und Nullpunktsstabilität führen, sondern im Vergleich zum Stand der Technik in der Praxis eine Verbesserung der oben genannten drei Größen sowie eine Verbesserung der Nachweisgrenzen bezüglich der Messung der Konzentrationen der zu bestimmenden Molekülverbindungen um mindestens jeweils den Faktor 10 ermöglichen.

Erfindungsgemäß wird die genannte Aufgabe durch ein Verfahren gemäß Anspruch 1 gelöst. Eine erfindungsgemäße Vorrichtung sieht zur Lösung der Aufgabe die in Anspruch 19 definierten Merkmale vor.

Während bei den Choppersystemen gemäß dem Stand der Technik die lichtdurchlässigen- bzw. lichtundurchlässigen Sektoren mindestens so groß sein müssen wie der Strahlquerschnitt, um die volle Modulationstiefe zu erreichen, so daß im allgemeinen nur eine um den Faktor 10 im Vergleich zur Drehzahl des Chopperantriebs erhöhte Modulationsfrequenz erreicht wird, weist das erfindungsgemäße Verfahren bevorzugt eine um den Faktor 10 bis 10000 gegenüber der Antriebsfrequenz erhöhte Modulationsfrequenz auf. Letzteres wird dadurch erreicht, daß sowohl der bewegte, als auch der stationäre Teil des Choppersystems lichtdurchlässige bzw. lichtundurchlässige Sektoren aufweisen, die wesentlich kleinere geometrische Abmessungen aufweisen, als der Strahlquerschnitt. Durch die Relativbewegung zwischen dem stationären und dem beweglichen Teil des Choppers wird ständig der gesamte Strahlquerschnitt moduliert, d.h. es muß im Unterschied zum Stand der Technik nicht abgewartet werden bis die jeweilige Chopperöffnung sich über den gesamten Strahlquerschnitt hinwegbewegt hat. Vielmehr ist die Zeit um den Faktor Strahldurchmesser dividiert durch Öffnungsbreite der Chopperstege kürzer.

In einer weiteren Ausbildung der Erfindung sind die Stege des bewegten Teils des Choppersystems schmaler ausgebildet als die stationären Öffnungen oder sind die Stege des stationären Teils schmaler ausgebildet als die bewegten Öffnungen. Dadurch werden annähernd recheckförmige zeitabhängige Intensitätssignale mit hoher Flankensteilheit erzielt. Letzteres ermöglicht zeitabhängige Signale am Detektor, die durch ein Plateau gekennzeichnet sind. Erfindungsgemäß erfolgt die Auswertung der Signale so, daß der Mittenbereich des Plateaus ausgewertet wird, so daß als weiterer Vorteil im Vergleich zum Stand der Technik Schwankungen der Chopperfrequenz d.h. Jittereffekte, sich nicht nachteilig auf die Meßgenauigkeit auswirken. Stehen die Stege des einen Teils des Choppersystems jeweils vor den Lücken des anderen Teils, so wird der Strahlengang maximal abgedunkelt. Bewegt sich der eine Teil jeweils um eine halbe Periode weiter, so ist der Strahlengang maximal geöffnet. Man erhält somit eine Chopperfrequenz, die sich aus dem Produkt von Frequenz des Chopperantriebs und der Sektorenzahl der Choppers ergibt. Bei einer Sektorenzahl von z.B. 100 erhält man bei einer Frequenz des antreibenden Motors von 30 pro Sekunde eine Modulationsfrequenz von 3 kHz. Da dieses erfindungsgemäße Choppersystem im Vergleich zum Stand der Technik im allgemeinen sehr kleine Strukturen im Bereich von 10 - 5000 Mikrometer aufweist, ist ein weiterer Gegenstand der Erfindung die Herstellung des Systems unter Einsatz neuer Methoden der Mikrostrukturtechnik.

Das erfindungsgemäße System wird zur Multikomponentenanalyse von mehreren Molekülverbindungen eingesetzt. Die Auswahl der jeweiligen Gaskomponente erfolgt durch ein optisches Interferenzfilter, dessen Transmissionswellenlänge mit der Absorptionswellenlänge des zu untersuchenden Gases zusammenfällt. Alternativ kann eine Kombination von optischem Filter und Gasfilter, d.h. eine mit dem zu untersuchenden Gas gefüllte Zelle, in den Strahlengang geschwenkt werden. Für die Multikomponentenanalyse werden mehrere solcher Interferenzfilter bzw. Kombinationen aus Interferenzfilter und Gasfilter simultan in den Strahlengang geschwenkt.

In einer weiteren bevorzugten und vorteilhaften Ausbildung der Erfindung weisen die stationären und bewegten Teile des Choppersystems mehrere Sektorensysteme mit jeweils unterschiedlicher Sektorenzahl auf. Ferner sind die unterschiedlichen Sektorenssysteme unterschiedlichen Gasen zugeordnet, d.h. mit unterschiedlichen Interferenzfiltern bzw. Gasfiltern versehen. Die den jeweiligen Gasen zugeordneten unterschiedlichen Modulationsfrequenzen werden am Detektor durch Lok-kIn-Verstärker mit an die jeweilige Modulationsfrequenz angepaßter Mittenfrequenz separiert und weiterverarbeitet.

Insgesamt wird durch die Erfindung ein Verfahren und eine Vorrichtung zur simultenen Messung der Konzentrationen von Molekülverbindungen durch optische Absorption geschaffen, die im Gegensatz zum Stand der Technik bei einfacher und preisgünstiger Ausgestaltung eine hohe Chopperfrequenz bei niedriger Drehzahl des Antriebselements, d.h. ohne Einsatz von Getrieben, ermöglicht und gleichzeitig erfindungsgemäß bezweckt, daß Schwankungen der Chopperfrequenz sich nicht störend auf die Meßgenauigkeit auswirken.

Weiter Vorteile und Merkmale der Erfindung ergeben sich aus den Ansprüchen und aus der nachfolgenden Beschreibung, in der bevorzugte Ausgestaltungen des Verfahrens und der erfindungsgemäßen Vorrichtung unter Bezugnahme auf die Zeichnungen im einzelnen erläutert sind. Dabei zeigt:

Fig. 1    Eine schematische Darstellung eines bevorzugten Merkmals der erfindungsgemäßen Vorrichtung.

Fig. 2    Eine Weiterentwicklung des Merkmals von Fig. 1

Fig. 3    Eine durch die Vorrichtung der Figuren 1 und 2 erzeugte Signalfolge am Strahlungsdetektor

Fig. 4    Ein nicht erfindungsgemäßes Gesamtsystem zur Detektion der Konzentrationen von Molekülverbindungen in Flüssig keiten und Gasen zur Erlaüterung des Meßprinzips

Fig. 5    Ein erfindungsgemäßes Gesamtsystem zur simultanen Detektion der Konzentrationen mehrerer Molekülverbindungen in Flüssigkeiten und Gasen

Fig. 6    Ein erfindungsgemäßes Gesamtsystem zur simultanen Detektion der Konzentration mehrerer Molekülverbindungen unter Einsatz von getakteten Lichtquellen

Die Vorrichtung weist in der dargestellten Ausführungsform ein bewegtes Element 1 und ein feststehendes Element 2 auf. Element 1 und Element 2 sind im wesentlichen deckungsgleich übereinander bzw. nebeneinander angeordnet. Bei Rotation der Segmentscheibe 1 wird der Strahlengang 27, 62,63 abwechslungweise freigegeben bzw. abgedeckt, indem die Stege 3 des bewegten Systems 1 über den Stegen 4 bzw. die Öffnungen 5 über den Öffnungen 6 des stationären Systems 2 zu liegen kommen. In einer speziellen Ausführungsform kann das stationäre System 2 identisch wie das bewegte System 1, d.h. als ganze Scheibe, ausgebildet sein.

In einer weiteren, nicht dargestellten Ausführungsform kann anstelle der Rotation auch eine lineare, relative Hin- und Herbewegung der beiden Teilsysteme 1,2 gegeneinander stattfinden. In diesem Fall werden die Stege 3,4 nicht radial, sondern parallel zueinander angeordnet.

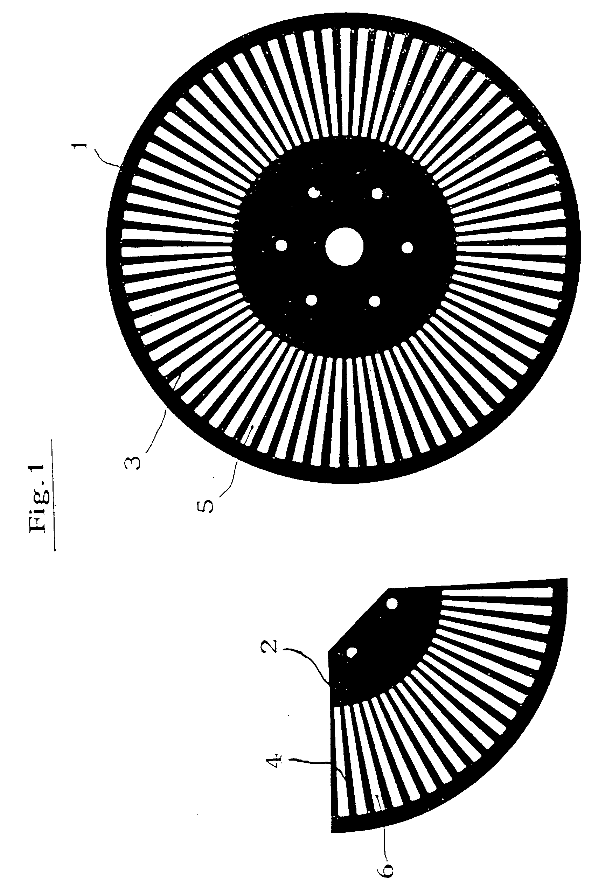

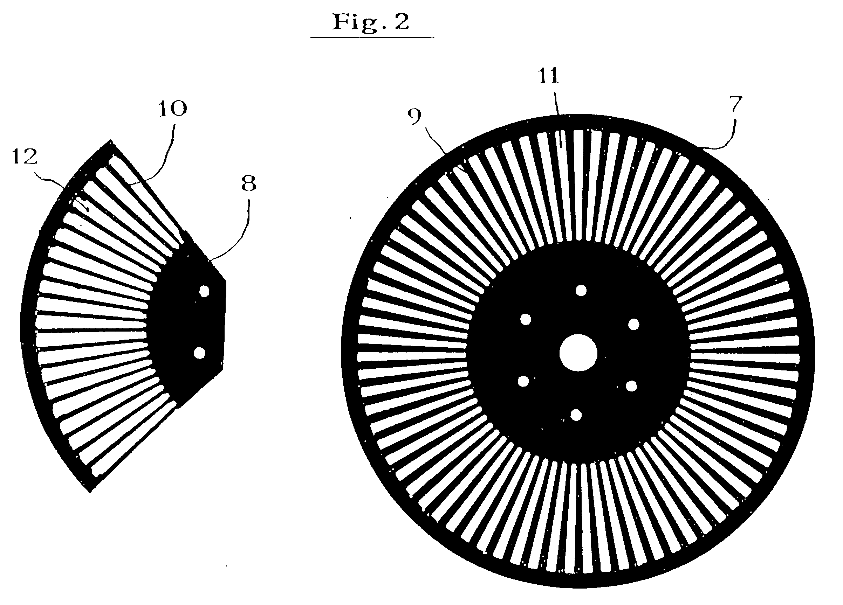

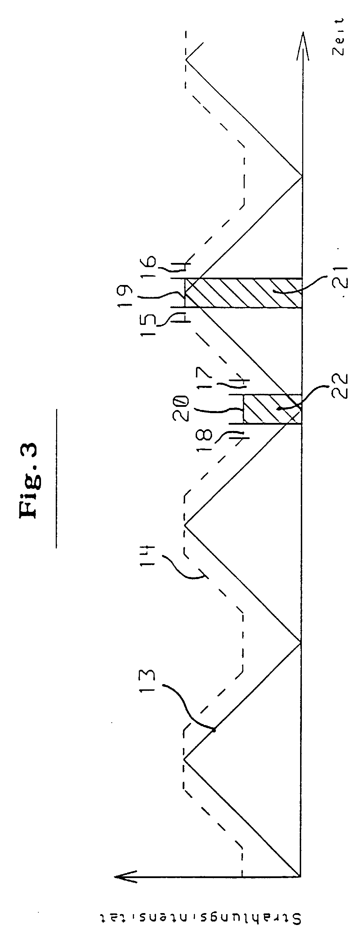

In Weiterentwicklung von der in Fig. 1 dargestellten Chopperanordnung zeigt Fig. 2 ein System, das auch bei schwankender Chopperfrequenz, d.h. bei einem Jitter von Scheibe 1,7,37,41 ein konstantes Signal am Detektor 31,45 ermöglicht. Zu diesem Zweck sind die Stege 9 des bewegten Teils 7 dünner ausgebildet als die Öffnungen 12 des stationären Teils 8 bzw. sind die Stege des stationären Teils 10 dünner ausgebildet als die Öffnungen 11 des bewegten Teils 7. Während bei identischer Breite von Stegen 1,4 und Öffnungen 5,6 der zeitliche Verlauf der Strahlungsintensität gemäß der Kurve 13 (Fig. 3) ausgebildet ist, erhält man für den Fall, daß die Stege 9 des bewegten Teils 7 dünner ausgebildet sind als die Öffnungen 12 des stationären Teils 8, einen Strahlungsintensitätsverlauf gemäß der Kurve 14. Letztere weist gegenüber der Kurve 13 den Vorteil auf, daß die durch Frequenzschwankungen bedingten Jittereffekte 15,16,17,18 sich dadurch nicht störend auswirken, daß zur Auswertung des Detektorsignals nur die Bereiche 19,20 herangezogen werden, die durch ein Plateau gekennzeichnet sind. Indem man nacheinander die Integrale 21,22 bildet, die innerhalb der Jitterbereiche liegen, und die Differenz von Integral 21 - Integral 22 bildet, wird ein jitterfreies Endresultat erzielt, das durch höhere Meßgenauigkeit, bessere Nullpunktsstabilität und bessere Nachweisempfindlichkeit im Vergleich zum Stand der Technik gekennzeichnet ist.

Die Auswertung erfolgt nach dem Beer'schen Gesetz unter Nutzung der Formel

$$C_i = K_i \times \log(\text{Integral}_{Max} - \text{Integral}_{Min})_i \qquad (1)$$

wobei $_i$ für die Gaskomponente $_i$ steht und $K_i$ eine Konstante ist, welche die Konzentration $C_i$ an den Absolutwert der Konzentration der Komponente anpaßt. $\text{Integral}_{Max}$ ist die Fläche 21, $\text{Integral}_{Min}$ ist die Fläche 22 in Fig. 3.

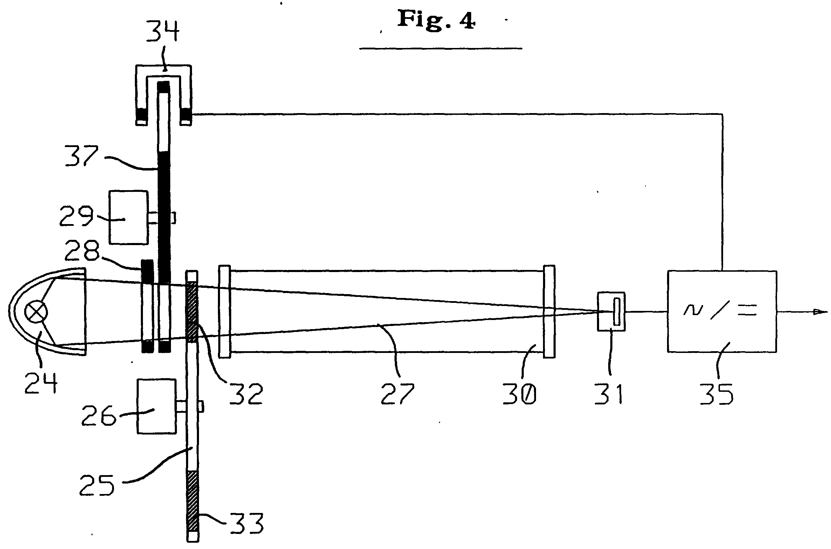

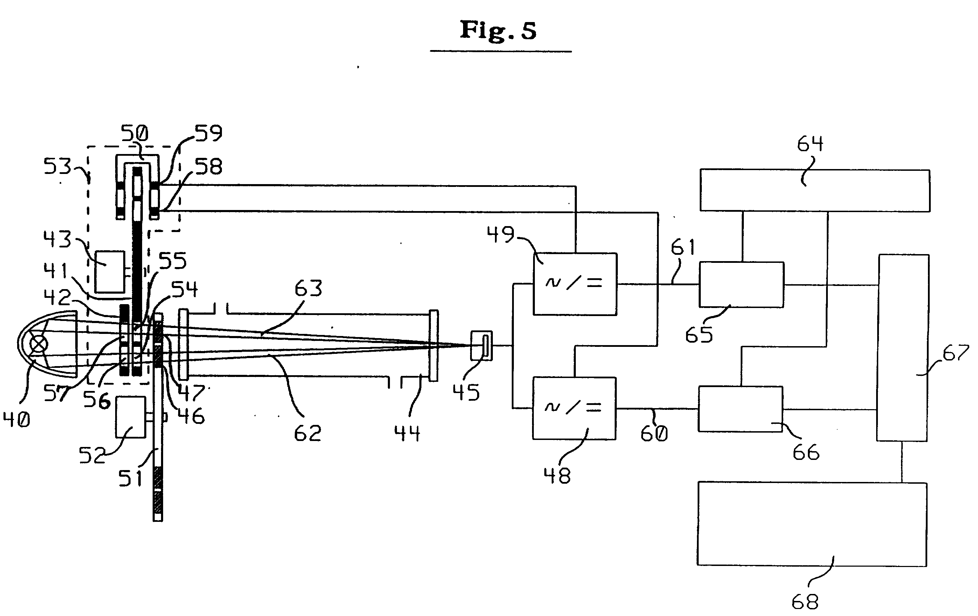

Das aus bewegtem Chopper-Teilsystem 41,37 (Fig. 4,5) und stationärem Chopper-Teilsystem 28,42 bestehende System zerhackt die Strahlung 27,62,63 einer optischen Strahlungsquelle 24,40. Ein Strahlungsdetektor 31,45 erzeugt intensitätsproportionale zeitabhängige Spannungs-/Stromverläufe 13,14, die von einer elektronischen Signalverarbeitung 35,48,49 verarbeitet werden. Der jeweils interessierende optische Spektralbereich wird durch optische Interferenzfilter 32,33,46,47 durchgelassen, wobei die jeweils gewünschten Filter über einen Motor 26,52 simultan eingeschwenkt werden. Zur Synchronisation der elektronischen Signalverarbeitung 35,48,49 und der Chopperfrequenz wird eine Lichtschranke 34,50 eingesetzt, die insbesondere den Einsatz der Lock-In-Technik ermöglicht bzw. eine Integralbildung gemäß Fig. 3 unter Einhaltung der Zeitintervalle 19,20 d.h. unter Ausnutzung der Intensitätsplateaus gestattet. Dabei werden in Abwandlung der üblichen Lock-In-Technik synchron mit dem Takt der Lichtschranke 34,50 die Integrale 19,20 innerhalb jeder Signalperiode 13,14 gebildet und über einen Tiefpaß einer zeitlichen Mittelwertbildung über mehrere Signalperioden 13,14 unterzogen.

In einer ersten Ausbildung der Erfingung gemäß Fig.5 ist die simultane Messung mehrerer Molekülverbindungen dadurch möglich, daß gleichzeitig mindestens zwei optische Interferenzfilter 46,47 in den Strahlengang 62,63 geschwenkt werden und daß der bewegte Teil 41 des Choppersystems 53 sowie der stationäre Teil 42 des Choppersystems mindestens 2 Stegsysteme/2 Öffnungssysteme 54,55/56,57 aufweisen. Die auf einem Träger jeweils befindlichen Stegsysteme/Öffnungssysteme sind durch unterschiedliche Sektorenzahlen gekennzeichnet: Bis zum Radius R1, der der Mitte des Strahlers 40 zugeordnet ist, wird die Sektorenzahl S1 und außerhalb des Radius R1 die Sektorenzahl S2 realisiert. Entsprechend angeordnete Lichtschranken 58,59 ermitteln die unterschiedlichen Chopperfrequenzen f1 und f2. Dadurch erhält man am Strahlungsdetektor 45 gleichzeitig zwei Wechselspannungssignale der Frequenz f1 und f2. Diese Frequenzen sind jeweils den optischen Interferenzfiltern 46,47 zugeordnet. Diese Interferenzfilter weisen optisch Durchlässigkeiten bei verschiedenen Wellenlängen auf, die den Wellenlängen der Absorptionsbanden der zu untersuchenden Gase entsprechen. Dementsprechend bewirken die in der Meßzelle 44 enthaltenen Gaskomponenten bzw. Molekülverbindungen einer Flüssigkeit eine Schwächung der Intensität der zugeordneten Wellenlänge. Aus dieser Schwächung wird die zugeordnete Konzentration der interessierenden Molekülverbindung gemäß dem bekannten Beer'schen Gesetz rechnerisch durch die elektrische Signalverarbeitung 48,49 mit nachgeschaltetem Mikroprozessor ermittelt. In einer bevorzugten Ausbildung werden die am Detektor 45 vorliegenden Wechselspannungen der Frequenzen f1, f2 über Lock-In-Verstärker 48,49 mit den Mittenfrequenzen f1,f2 unter Ausnutzung der Synchronisationssignale 58,59 in zwei intensitätsproportionale Ausgangssignale 60,61 umgewandelt, wobei zuvor die Differenz der Integrale gemäß Formel (1) gebildet wird. Dadurch ist eine klare Trennung der den Frequenzen f1, f2 und damit den Wellenlängen $\lambda_1$, $\lambda_2$ d.h. den Molekülverbindungen 1,2 zugeordneten Signale am Detektor 45 möglich. Selbstverständlich kann die Zahl der simultan zu untersuchenden Molekülverbindungen über zwei gesteigert werden, indem die Zahl der Interferenzfilter 46,47 sowie der Sektoren 54,55,56,57 mit unterschiedlichen Stegzahlen und unterschiedlichen Radienbereichen größer als jeweils zwei gewählt wird.

Um Jittereffekte in ihrer Wirkung auszuschalten, werden über eine Zeitschaltung 64 nur die Bereiche 21,22 innerhalb der Plateaus 19,20 der Signalfunktionen am Detektor ausgeblendet, die selbst bei Existenz eines Jitters außerhalb der ansteigenden bzw. abfallenden Flanken der Signalfunktionen 14 liegen. Die innerhalb der zugeordneten Zeitfenster 19,20 liegenden Signalteile werden über Integratoren 65,66 integriert und die Impulse in einen Speicher 67 zwischengespeichert. Von einem Mikrokontroller 68 werden die Differenzen der Integrale gebildet, anschließend einer Mittelwertbildung über mehrere Perioden unterzogen, der Mittelwert logarithmiert und das Ergebnis über einen konstanten Faktor an die absoluten Konzentrationen der Molekülverbindungen angepaßt.

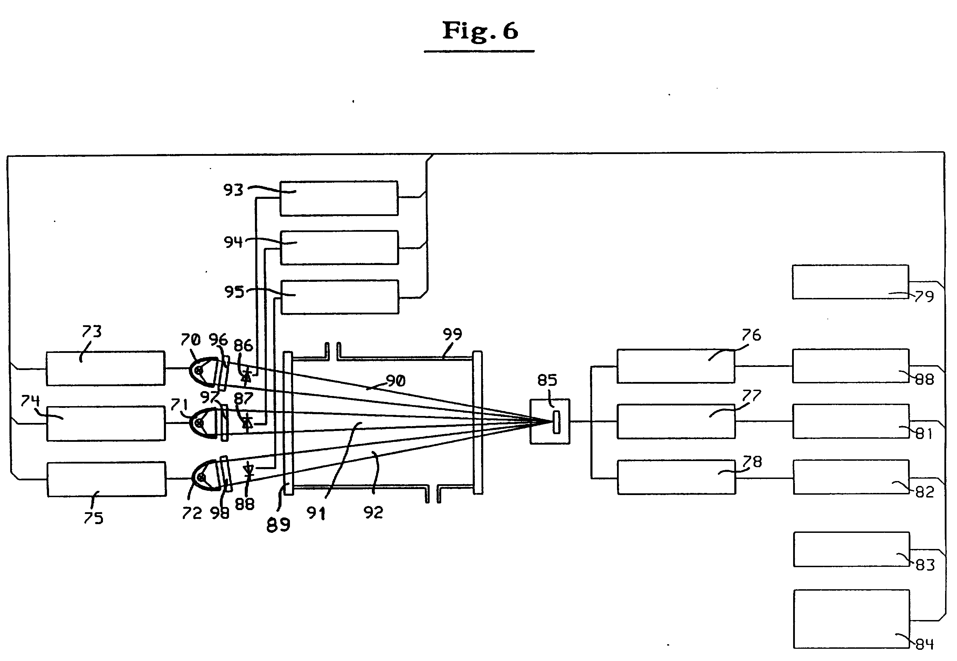

In einer zweiten Ausbildung (Fig.6) der Erfindung können die mechanischen Choppersysteme entfallen, indem getaktete Strahlungsquellen 70,71,72 unterschiedlicher Taktfrequenzen fl,f2,f3, die in Serie mit Spektralfiltern stehen, eingesetzt werden. Dabei werden die Taktsignale der Taktgeneratoren 73,74,75 neben der Ansteuerung für die Srahlungsquellen 70,71,72 für die Synchronisation der Verstärker 76,77,78 der Mittenfrequenzen f1,f2,f3 verwendet. Die Integralbildung, die Zeitschaltung der Integratoren 80,81 82, die Speicherung 83 und die Weiterverarbeitung der gespeicherten Daten über einen Mikrokontroller 84 erfolgt entsprechend der Anleitung zum technischen Handeln gemäß Fig.5. Um Intensitätsschwankungen der Strahlungsquellen 70,71,72 zu erfassen und bei der Auswertung zu berücksichtigen, können Referenzdetektoren 86,87,88 vor dem Durchgang der Strahlung durch die Meßzelle 99 d.h. vor Eintritt der Strahlung durch das erste Fenster 89 der Meßzelle, aufgebaut sein. Die zugeordneten Signale 90,91,92 werden von Verstärkern 93, 94,95 verstärkt und dem Mikrokontroller 84 zugeführt, welcher die Korrekturen zur Kompensation der Intensitätsschwankungen der Strahlungsquellen 70,71,72 durchführt.

## Patentansprüche

1. Verfahren zum Messen der Konzentrationen unter Ausnutzung der Strahlungsabsorption der interessierenden Molekülverbindungen, wobei die durch das Medium hindurchtretende Strahlung erfaßt wird, dadurch gekennzeichnet, daß nur ein einziges strahlungsempfindliches Sensorelement (45, 85) zur Detektion der durch das Medium geschwächten Strahlung eingesetzt und simultan mehrere Molekülverbindungen mittels mehrerer, dem Sensorelement (45, 85) nachgeordneter parallelgeschalteter Schmalbandverstärker (48, 49, 76, 77, 78) mit verschiedenen Mittenfrequenzen bestimmt werden.

2. Verfahren nach Anspruch 1, dadurch gekennzeichnet, daß die Strahlung durch ein mechanisches Choppersystem moduliert wird.

3. Verfahren nach Anspruch 1 bis 2, dadurch gekennzeichnet, daß das Choppersystem aus einem stationären und einem sich bewegenden Teilsystem besteht, die im Strahlengang nacheinander angeordnet sind.

4. Verfahren nach Anspruch 1 bis 3, dadurch gekennzeichnet, daß das stationäre Teilsystem und das sich bewegende Teilsystem strahlungsdurchlässige und strahlungsundurchlässige Öffnungen und Stege aufweisen.

5. Verfahren nach Anspruch 1 bis 4, dadurch gekennzeichnet, daß die Öffnungen und Stege die gleiche Breite aufweisen.

6. Verfahren nach Anspruch 1 bis 4, dadurch gekennzeichnet, daß die Öffnungen des stationären Teils breiter sind als die Stege des bewegten Teils oder daß die Öffnungen des bewegten Teils breiter sind als die Stege des stationären Teils

7. Verfahren nach Anspruch 1 bis 6, dadurch gekennzeichnet, daß sich sowohl auf dem stationären, als auch auf dem bewegten Teilsystem mehrere Anordnungen aus Stegen und Öffnungen befinden, wobei die verschiedenen Anordnungen sich durch die Zahl und die Breite von Stegen und Öffnungen unterscheiden.

8. Verfahren nach Anspruch 1 bis 7, dadurch gekennzeichnet, daß eine kontinuierlich strahlende Quelle eingesetzt wird

9. Verfahren nach Anspruch 1, dadurch gekennzeichnet, daß mehrere elektronisch getaktete Strahlungsquellen eingesetzt werden, die sich durch ihre Taktfrequenzen unterscheiden

10. Verfahren nach Anspruch 1 bis 9, dadurch gekennzeichnet, daß die Strahlung jeder Taktfrequenz ein separates Spektralfilter durchläuft.

11. Verfahren nach Anspruch 1 bis 10, dadurch gekennzeichnet, daß die Transmissionwellenlänge eines Spektralfilters einer Absorptionswellenlänge der zu bestimmenden Molekülverbindung entspricht.

12. Verfahren nach Anspruch 1 bis 10, dadurch gekennzeichnet, daß die Transmissionwellenlänge mindestens eines Spektralfilters außerhalb von Absorptionwellenlängen des Mediums liegt.

13. Verfahren nach Anspruch 1 bis 12, dadurch gekennzeichnet, daß mehrere Spektralfilter unterschiedlicher Transmissionswellenlängen simultan in den Strahlengang geschwenkt werden.

14. Verfahren nach Anspruch 1 bis 13, dadurch gekennzeichnet, daß eine frequenzselektive und phasenselektive Auswertung der Sensorsignale erfolgt.

15. Verfahren nach Anspruch 1 bis 14, dadurch gekennzeichnet, daß lediglich die Mittenbereiche der Plateaus der Sensorsignale ausgewertet werden, und daß eine Integralbildung dieser Mittelbereiche stattfindet.

16. Verfahren nach Anspruch 1 bis 15, dadurch gekennzeichnet, daß photoelektrische Sensorelemente wie z.B. Si, PbS, PbSe, HgCdTe, InSb, eingesetzt werden.

17. Verfahren nach Anspruch 16, dadurch gekennzeichnet, daß die Sensorelemente in photoelektrischer Schaltungskonfiguration betrieben werden.

18. Verfahren nach Anspruch 1 bis 17, dadurch gekennzeichnet, daß weitere Sensorelemente zur Detektion der ungeschwächten Strahlung vor dem Durchgang durch das Medium eingesetzt werden.

19. Vorrichtung zur Messung von Konzentrationen unter Ausnutzung der Strahlungsabsorption eines Mediums, mit mindestens einer Strahlungsquelle, dadurch gekennzeichnet, daß dem Medium nur ein einziges strahlungsempfindliches Sensorelement (45, 85) nachgeordnet ist und daß mehrere parallelgeschaltete Schmalbandverstärker (48, 49, 76, 77, 78) mit verschiedenen Mittenfrequenzen dem Sensorelement (45, 85) folgen.

20. Vorrichtung nach Anspruch 19, dadurch gekennzeichnet, daß ein Choppersystem 53 zwischen Strahlungsquelle 40 und Sensorelement 45 sich befindet.

21. Vorrichtung nach Anspruch 19 bis 20, dadurch gekennzeichnet, daß das Choppersystem 53 einen stationären Teil 42 und einen sich bewegenden Teil 41 aufweist.

22. Vorrichtung nach Anspruch 19 bis 21, dadurch gekennzeichnet, daß das stationäre Teilsystem 42 und das sich bewegende Teilsystem 41 abwechselnd strahlungsdurchlässige und strahlungsundurchlässige Öffnungen 5,6,11,12 und Stege 3,4,9,10 aufweisen.

23. Vorrichtung nach Anspruch 19 bis 22, dadurch gekennzeichnet, daß die Öffnungen 5,6 dieselbe Breite aufweisen, wie die Stege 3,4

24. Vorrichtung nach Anspruch 19 bis 23, dadurch gekennzeichnet, daß die Breite der Öffnungen 11 größer ist als die Breite der Stege 10 oder daß die Breite der Öffnungen 12 größer ist als die Breite der Stege 9.

25. Vorrichtung nach Anspruch 19 bis 24, dadurch gekennzeichnet, daß die Öffnungen 5,6,11,12 und Stege 3,4,9,10 Quer-Abmessungen im Bereich zwischen 10 und 5000 Mikrometer aufweisen.

26. Vorrichtung nach Anspruch 19 bis 25, dadurch gekennzeichnet, daß die stationären und die bewegten Teilsysteme 1,2,7,8 mehrere nebeneinanderliegende Anordnungen 54,55,56,57 aus Stegen und Öffnungen enthalten mit verschiedenen Zahlen an Stegen und Öffnungen.

27. Vorrichtung nach Anspruch 19 bis 26, dadurch gekennzeichnet, daß die Strahlungsquelle 40 kontinuierlich strahlt.

28. Vorrichtung nach Anspruch 19, dadurch gekennzeichnet, daß mehrere elektronisch getaktete Strahlungsquellen 70,71,72 verwendet werden, wobei die Taktfrequenzen 73,74,75 der Quellen 70,71,72 mit den Mittenfrequenzen der Schmalbandverstärker 76,77,78 übereinstimmen.

29. Vorrichtung nach Anspruch 19 bis 28, dadurch gekennzeichnet, daß die Strahlungen 70,71,72 jedes Frequenzgenerators 73,74,75 und die Strahlungen jeder Chopperanordnung ein separates Spektralfilter 96,97,98 aufweisen.

30. Vorrichtung nach Anspruch 19 bis 29, dadurch gekennzeichnet, daß die Spektralfilter 96,97,98 schmalbandige Interferenzfilter sind.

31. Vorrichtung nach Anspruch 19 bis 30, dadurch gekennzeichnet, daß mehrere Spektralfilter 46,47 über einen motorischen Antrieb 52 in die Teilstrahlengänge 62,63 geschwenkt werden.

32. Vorrichtung nach Anspruch 19 bis 31, dadurch gekennzeichnet, daß die Frequenzen der Chopperanordnung 53 mit Lichtschranken 50 abgetastet werden, und daß die Lichtschrankensignale 58,59 die Verstärker 48,49 bezüglich Mittenfrequenz und Phasenlage steuern.

33. Vorrichtung nach Anspruch 19 bis 32, dadurch gekennzeichnet, daß die Absolutwerte der Integrale 21,22 in einem Speicher 67 abgelegt werden, und daß anschließend der Logarithmus der Differenz der Integrale in einen Mikrokontroller 68 gebildet und mit einem Faktor multipliziert wird, wobei die Differenz der Integrale vorher einer Mittelwertbildung über mehrere Perioden unterzogen wird.

34. Vorrichtung nach Anspruch 19 bis 33, dadurch gekennzeichnet, daß vor der Meßzelle 99 mindestens ein Referenz-Strahlungssensor 86,87,88 angeordnet ist und daß Verstärker 93,94,95 nachgeordnet sind, die die Strahlungsintensitäten vor dem Eintrittsfenster 89 erfassen und diese zur Korrektur der Signale der Schmalbandverstärker 76,77,78 an den Mikrokontroller 84 weiterleiten

**Claims**

1. Method for measuring concentrations, utilizing the radiation absorption of the molecular compounds of interest, the radiation passing through the medium being detected, characterized in that only one radiation-sensitive sensor element (45, 85) is used for detecting the radiation attenuated by the medium and simultaneously several molecular compounds are determined by means of several parallel-connected narrow-band amplifiers (48, 49, 76, 77, 78) having different centre frequencies following the sensor element (45, 85).

2. Method according to claim 1, characterized in that the radiation is modulated by a mechanical chopper system.

3. Method according to claims 1 and 2, characterized in that the chopper system comprises a stationary partial system and a mobile partial system, arranged successively in the optical path.

4. Method according to claims 1 to 3, characterized in that the stationary partial system and the mobile partial system have radiation transparent and radiopaque openings and webs.

5. Method according to claims 1 to 4, characterized in that the openings and webs have the same width.

6. Method according to claims 1 to 4, characterized in that the openings of the stationary part are wider than the webs of the mobile part and that the openings of the mobile part are wider than the webs of the stationary part.

7. Method according to claims 1 to 6, characterized in that both on the stationary and on the mobile partial system are provided several arrays of webs and openings, the different arrays differing by the number and width of the webs and openings.

8. Method according to claims 1 to 7, characterized in that a continuously radiating source is used.

9. Method according to claim 1, characterized in that several electronically timed radiation sources are used, which differ by their clock frequencies.

10. Method according to claims 1 to 9, characterized in that the radiation of each clock frequency passes through a separate spectral filter.

11. Method according to claims 1 to 10, characterized in that the transmission wavelength of a spectral filter corresponds to an absorption wavelength of the molecular compound to be determined.

12. Method according to claims 1 to 10, characterized in that the transmission wavelength of at least one spectral filter is outside the absorption wavelengths of the medium.

13. Method according to claims 1 to 12, characterized in that several spectral filters with different transmission wavelengths are simultaneously pivoted into the optical path.

14. Method according to claims 1 to 13, characterized in that there is a frequency-selective and phase-selective evaluation of the sensor signals.

15. Method according to claims 1 to 14, characterized in that only the central areas of the plateau of the sensor signals are evaluated and that there is an integral formation of said central areas.

16. Method according to claims 1 to 15, characterized in that photoelectric sensor elements such as e.g. Si, PbS, PbSe, HgCdTe and InSb are used.

17. Method according to claim 16, characterized in that the sensor elements are operated in a photoelectric circuit configuration.

18. Method according to claims 1 to 17, characterized in that further sensor elements are used for the detection of the unattenuated radiation prior to passage through the medium.

19. Apparatus for measuring concentrations using the radiation absorption of a medium and having at least one radiation source, characterized in that the medium is followed by a single radiation-sensitive sensor element (45, 85) and that several parallel-connected narrow-band amplifiers (48, 49, 76, 77, 78) with different centre frequencies follow the sensor element (45, 85).

20. Apparatus according to claim 19, characterized in that a chopper system (53) is located between the radiation source (40) and the sensor element (45).

21. Apparatus according to claims 19 and 20, characterized in that the chopper system (53) has a stationary part (42) and a mobile part (41).

22. Apparatus according to claims 19 to 21, characterized in that the stationary partial system (42) and the mobile partial system (41) have alternating radiation transparent and radiopaque openings (5, 6, 11, 12) and webs (3, 4, 9, 10).

**23.** Apparatus according to claims 19 to 22, characterized in that the openings (5, 6) have the same width as the webs (3, 4).

**24.** Apparatus according to claims 19 to 23, characterized in that the width of the openings (11) is greater than the width of the webs (10) or that the width of the openings (12) is greater than the width of the webs (9).

**25.** Apparatus according to claims 19 to 24, characterized in that the openings (5, 6, 11, 12) and webs (3, 4, 9, 10) have transverse dimensions in the range 10 to 5000 micrometres.

**26.** Apparatus according to claims 19 to 25, characterized in that the stationary and mobile partial systems (1, 2, 7, 8) have several juxtaposed arrays (54, 55, 56, 57) of webs and openings with different numbers of webs and openings.

**27.** Apparatus according to claims 19 to 26, characterized in that the radiation source (40) radiates continuously.

**28.** Apparatus according to claim 19, characterized in that use is made of several electronically timed radiation sources (70, 71, 72), the clock frequencies (73, 74, 75) of the sources (70, 71, 72) coinciding with the centre frequencies of the narrow-band amplifiers (76, 77, 78).

**29.** Apparatus according to claims 19 to 28, characterized in that the radiation sources (70, 71, 72) of each frequency generator (73, 74, 75) and the radiation sources of each chopper system have a separate spectral filter (96, 97, 98).

**30.** Apparatus according to claims 19 to 29, characterized in that the spectral filters (96, 97, 98) are narrow-band interference filters.

**31.** Apparatus according to claims 19 to 30, characterized in that several spectral filters 46, 47 are pivoted by means of a motor drive 52 into the partial optical paths 62, 63.

**32.** Apparatus according to claims 19 to 31, characterized in that the frequencies of the chopper system 53 are scanned with light barriers 50 and that the light barrier signals 58, 59 control the amplifiers 48, 49 with respect to the centre frequency and phase position.

**33.** Apparatus according to claims 19 to 32, characterized in that the absolute values of the integrals 21, 22 are filed in a memory 67 and that subsequently the logarithm of the difference of the integrals is formed in a microcontroller 68 and multiplied with a factor, the difference of the integrals previously undergoing an averaging process over several periods.

**34.** Apparatus according to claims 19 to 33, characterized in that, upstream of the measurement cell 99 is provided at least one reference radiation sensor 86, 87, 88, followed by amplifiers 93, 94, 95, which determine the radiation intensities in front of the entrance window 89 and transfer same to the microcontroller 84 for correcting the signals of the narrowband amplifiers 76, 77, 78.

**Revendications**

**1.** Procédé pour la mesure de concentrations en utilisant l'absorption du rayonnement par les composés moléculaires concernés, dans lequel on détecte le rayonnement traversant le milieu, caractérisé en ce qu'un seul et unique capteur (45,85) sensible au rayonnement est mis en oeuvre pour détecter le rayonnement absorbé par le milieu et en ce que simultanément, on détermine plusieurs liaisons moléculaires au moyen de plusieurs amplificateurs à bande étroite (48,49,76,77,78) et à fréquences centrales différentes disposés à la suite du capteur (45,85) et montés en parallèle.

**2.** Procédé selon la revendication 1, caractérisé en ce que le rayonnement est modulé par un dispositif mécanique de découpage.

**3.** Procédé selon les revendications 1 à 2, caractérisé en ce que le dispositif de découpage se compose d'une partie stationnaire et d'une partie mobile, disposées l'une à la suite de l'autre dans la direction des rayons.

**4.** Procédé selon les revendications 1 à 3, caractérisé en ce que la partie stationnaire et la partie mobile du système présentent des ouvertures et des ailettes perméables et imperméables au rayonnement.

**5.** Procédé selon les revendications 1 à 4, caractérisé en ce que les ouvertures et les ailettes présentent la même largeur.

**6.** Procédé selon les revendications 1 à 4, caractérisé en ce que les ouvertures de la partie stationnaire sont plus larges que les ailettes de la partie mobile ou que les ouvertures de la partie mobile sont plus larges que les ailettes de la partie stationnaire.

**7.** Procédé selon les revendications 1 à 6, caractérisé en ce que plusieurs agencements à base d'ailettes et d'ouvertures se trouvent aussi bien sur la partie stationnaire que sur la partie mobile du système, les différentes dispositions se différenciant par le nombre et la largeur des ailettes et des ouvertures.

8. Procédé selon les revendications 1 à 7, caractérisé en ce que l'on fait appel à une source de rayonnement continu.

9. Procédé selon la revendication 1, caractérisé en ce que l'on fait appel à plusieurs sources de rayonnement cadencées électroniquement, se différenciant par leurs fréquences élémentaires de cadencement.

10. Procédé selon les revendications 1 à 9, caractérisé en ce que le rayonnement de chaque fréquence élémentaire de cadencement traverse un filtre spectral séparé.

11. Procédé selon les revendications 1 à 10, caractérisé en ce que la longueur d'onde de transmission d'un filtre spectral correspond à une longueur d'onde d'absorption du composé moléculaire à déterminer.

12. Procédé selon les revendications 1 à 10, caractérisé en ce que la longueur d'onde de transmission d'au moins un filtre spectral est située en-dehors des longueurs d'ondes d'absorption du milieu.

13. Procédé selon les revendications 1 à 12, caractérisé en ce que plusieurs filtres spectraux de longueurs d'onde de transmission différentes sont orientés par pivotement simultanément dans la direction des rayons.

14. Procédé selon les revendications 1 à 13, caractérisé en ce qu'on procède à une exploitation des signaux du détecteur sélective en fréquence et en phase.

15. Procédé selon les revendications 1 à 14, caractérisé en ce que seules les zones médianes des plateaux des signaux du détecteur sont exploitées, et que l'on réalise une intégration de ces zones médianes.

16. Procédé selon les revendications 1 à 15, caractérisé en ce que l'on installe des capteurs photo-électriques tels que Si, PbS, PbSe, HgCdTe, InSb.

17. Procédé selon la revendication 16, caractérisé en ce que les capteurs sont montés pour être commandés en mode photo-électrique.

18. Procédé selon les revendications 1 à 17, caractérisé en ce que le capteur supplémentaire servant à la détection du rayonnement non absorbé est utilisé avant le passage dans le milieu.

19. Dispositif de mesure de concentrations en utilisant l'absorption du rayonnement par un milieu, comprenant au moins une source de rayonnement, caractérisé en ce qu'un seul et unique capteur (45,85) sensible au rayonnement est disposé à la suite du milieu et que plusieurs amplificateurs à bande étroite (48,49,76,77,78) montés en parallèle à fréquences médianes différentes suivent le capteur (45,85).

20. Dispositif selon la revendication 19, caractérisé en ce qu'un dispositif de découpage (53) est disposé entre la source de rayonnement (40) et l'élément détecteur (45).

21. Dispositif selon les revendications 19 à 20, caractérisé en ce que le dispositif de découpage (53) présente une partie stationnaire (42) et une partie mobile (41).

22. Dispositif selon les revendications 19 à 21, caractérisé en ce que la partie stationnaire (42) du système et la partie mobile (41) du système présentent en alternance des ouvertures (5,6,11,12) et des ailettes (3,4,9,10) perméables et imperméables au rayonnement.

23. Dispositif selon les revendications 19 à 22, caractérisé en ce que les ouvertures (5,6) présentent la même largeur que les ailettes (3,4).

24. Dispositif selon les revendications 19 à 23, caractérisé en ce que la largeur des ouvertures (11) est supérieure à la largeur des ailettes (10) ou que la largeur des ouvertures (12) est supérieure à la largeur des ailettes (9).

25. Dispositif selon les revendications 19 à 24, caractérisé en ce que les ouvertures (5,6,11,12) et les ailettes (3,4,9,10) présentent des dimensions transversales comprises entre 10 et 5000 micromètres.

26. Dispositif selon les revendications 19 à 25, caractérisé en ce que les parties stationnaires et mobiles (1,2,7,8) du système comprennent plusieurs agencements côte à côte (54,55,56,57) d'ouvertures et d'ailettes comportant des nombres différents d'ailettes et d'ouvertures.

27. Dispositif selon les revendications 19 à 26, caractérisé en ce que la source de rayonnement (40) rayonne en continu.

28. Dispositif selon la revendication 19, caractérisé en ce que l'on utilise plusieurs sources de rayonnement (70,71,72) cadencées électroniquement, les fréquences élémentaires de cadencement (73,74,75) des sources (70,71,72) correspondant aux fréquences médianes des amplificateurs à bande étroite (76,77,78).

29. Dispositif selon les revendications 19 à 28, caractérisé en ce que les rayonnements (70,71,72) de chaque générateur de fréquence (73,74,75) et les rayonnements de chaque dispositif de découpage présentent un filtre spectral (96,97,98).

30. Dispositif selon les revendications 19 à 29, caractérisé en ce que les filtres spectraux (96,97,98) sont des filtres d'interférence à bande étroite.

31. Dispositif selon les revendications 19 à 30, caractérisé en ce que plusieurs filtres spectraux (46,47) sont orientés en pivotement par un dispositif d'entraînement motorisé (52) sur le passage des faisceaux divisés (62,63).

32. Dispositif selon les revendications 19 à 31, caractérisé en ce que les fréquences du dispositif de découpage (53) sont balayées par des obturateurs photo-électriques (50) et en ce que les signaux (58,59) des obturateurs photo-électriques commandent les amplificateurs (48,49) en ce qui concerne la fréquence centrale et la relation des phases.

33. Dispositif selon les revendications 19 à 32, caractérisé en ce que les valeurs absolues des intégrales (21,22) sont classées dans une mémoire (67) et en ce qu'ensuite, le logarithme de la différence des intégrales est obtenu dans un microcontrôleur (68) et multiplié par un facteur, la différence des intégrales étant préalablement moyennée sur plusieurs périodes.

34. Dispositif selon les revendications 19 à 33, caractérisé en ce qu'au moins un capteur de rayonnement de référence (86,87,88) est disposé devant le capteur (99) et en ce que sont disposés ensuite des amplificateurs (93,94,95) qui détectent les intensités de rayonnement devant la fenêtre d'entrée (89) et les transmettent au microcontrôleur (84) en vue de la correction des signaux des amplificateurs à bande étroite (76,77,78).

Fig. 1

EP 0 555 508 B1

# Fig. 2

12

EP 0 555 508 B1

# Fig. 3

**Fig. 4**

Fig. 5

EP 0 555 508 B1

# Fig. 6

EP 0 555 508 B1